# EUROPÄISCHE PATENTANMELDUNG

(11) **EP 1 209 859 A1**
(43) Veröffentlichungstag der Anmeldung: **29.05.2002**
(21) Anmeldenummer: 00125600.7
(22) Anmeldetag: 22.11.2000
(51) Int. Cl.: H04L 12/56, H04Q 11/04

(54) **Verfahren, Anordnung und Verwendung eines geschützten Kanals zur Wiederherstellung einer unterbrochenen Switched connection**

(71) Anmelder: SIEMENS AKTIENGESELLSCHAFT, 80333 München (DE)
(72) Erfinder: Happel, Thomas, 82178 Puchheim (DE); Lips, Werner, 81669 München (DE); Mekota, Thomas, 85354 Freising (DE); Pauls, Markus, 81476 München (DE)

(57) **Zusammenfassung**

Zur Wiederherstellung einer unterbrochenen Switched Connection SC zwischen zwei Teilnehmern A, B im einem Kommunikationsnetz KN mit zwei Übermittlungsknoten V_{A}, V_{B} und einer Netzsteuerung TMN, wobei der erste Teilnehmer A dem ersten Übermittlungsknoten V_{A} und der zweite Teilnehmer B dem zweiten Übermittlungsknoten V_{B} zugeordnet ist, wird zwischen den beiden Übermittlungsknoten V_{A}, V_{B} von der Netzsteuerung TMN auf zumindest einer Teilstrecke T zumindest ein geschützter Kanal PPC_{SC} aufgebaut, die Switched Connection SC zwischen den beiden Übermittlungsknoten V_{A}, V_{B} in dem geschützten Kanal PPC_{SC} aufgebaut, und bei Unterbrechung der Switched Connection SC infolge einer Unterbrechung des geschützten Kanal PPC_{SC} die unterbrochene Switched Connection SC dadurch wiederhergestellt, dass der geschützte Kanal PPC_{SC} wiedergestellt wird. Die Erfindung kann vorteilhaft mit bestehenden, standardisierten Signalisierungsprotokollen realisiert werden, d.h. eine erfindungsspezifische Erweiterung der Protokolle ist nicht erforderlich. Zudem wird der Signalisierungsaufwand zum Wiederaufbau von unterbrochenen Switched Connections SC signifikant reduziert, da lediglich der geschützte Kanal PPC_{SC} wiedergestellt wird.

## Beschreibung

In Kommunikationsnetzen, wie z.B. Telephonnetzen, ATM-Netzen oder auch dem Internet, unterscheidet man zwischen permanent bestehenden Verbindungen - auch 'Standleitungen' bzw. 'Permanent Connections (PC)' genannt - und solchen, die dynamisch zu Beginn der Nutzung aufgebaut und nach Abschluss der Nutzung wieder ausgelöst werden. Diese werden auch 'Wählleitungen' bzw. 'Switched Connections (SC)' genannt.

Permanent Connections werden üblicherweise durch Steueranweisungen aufgebaut, die von einem - meist zentralen - Netzmanagement ausgehen. Hierbei können entweder an alle betroffenen Knoten des Netzes entlang der Permanent Connection einzelne Steueranweisungen gegeben werden - in ATM-Netzen werden derart eingerichtete Verbindungen 'Permanent Virtuel Connections (PVC)' genannt - oder die Steueranweisungen gehen nur an einen Knoten und geben Start und Zielpunkt der gewünschten Verbindung an. Dieser Knoten baut dann die Verbindung unter Zuhilfenahme einer speziellen Signalisierung - im weiteren auch 'PC-Signalisierung' genannt - auf. Derart aufgebaute Verbindungen werden in ATM-Netzen 'Soft PVC (SPVC)' genannt. Die PC-Signalisierung erfolgt hierbei beispielsweise:
- gemäß den Recommendations der ITU-T mit entsprechend der Q.2767.1 (05/98), "Soft PVC Capability", Kapitel 1, 5 und 6 speziell für den Aufbau von SPVCs erweitertem Protokoll der Serie Q.2761 bis Q.2764 (02/95), "B-ISUP (Broadband ISDN User Part) Basic Call", oder
- gemäß der Empfehlung des ATM-Forum AF-PNNI-0055.000 (03/96), "Private Network-Network Interface", Kapitel 6.4.6.1, 6.4.6.2 und Annex C.

In dem erweiterten Protokoll für SPVC werden insbesondere 1) die Adresse des Endpunktes der SPVC sowie 2) ein Identifier zum Wiederfinden von unterbrochenen Teilverbindungen im Knoten übermittelt. In ATM-Netzen kann diese Methode auch für das Einrichten eines ganzen Pfades angewandt werden. Es entstehen in diesem Fall sog. 'Permanent Virtuell Paths (PVP)' bzw. 'Soft PVP (SPVP)'. Im weiteren werden nach dem speziellen Verfahren der Soft PVCs bzw. Soft PVPs eingerichtete PCs auch als 'Soft PCs (SPC)' bezeichnet.

Permanent Connections weisen folgende Charakteristika auf:
- Die PCs werden infolge von Steueranweisungen des Netzmanagements aufgebaut.
- PCs können als sog. 'Geschützte PCs' - auch 'Protected PCs (PPC)' genannt - eingerichtet werden. Zur Realisierung der PPC gibt es grundsätzlich zwei Konzepte: 1) Es wird vorab ein Ersatzweg eingerichtet, auf den im Bedarfsfall umgeschaltet wird; 2) Beim Ausfall einer PC wird diese automatisch wieder aufgebaut (Soft PCs sind somit per Definitionem PPCs). In beiden Fällen können die Teilnehmer die PC nach der Ersatzschaltung ohne weitere Eingriffe ihrerseits weiter nutzen.
- Für die Dauer der Verbindung besteht zwischen den Teilnehmern neben der PC keine zusätzliche Signalisierungsverbindung, d.h. neben dem Datenaustausch können zwischen den Teilnehmern keine begleitenden Signalisierungsdaten ausgetauscht werden. In ATM-Netzen besteht bei einer Soft PC ggf. eine (PC-) Signalisierungsverbindung zwischen dem Anfangs- und dem Endknoten der Soft PC, jedoch nicht zwischen den Teilnehmern.
- Es besteht eine feste Zuordnung zwischen Anfangs- und Endpunkt. Die Teilnehmer haben keine Auswahlmöglichkeit.

Switched Connections werden durch Steueranweisungen des Teilnehmers mittels der allgemeinen Signalisierung (diese sei zur Unterscheidung von der PC-Signalisierung im Rahmen dieser Anmeldung im weiteren auch 'SC-Signalisierung' genannt) in dem Augenblick aufgebaut, in dem der Teilnehmer eine Nutzung der Verbindung wünscht und zu dem Ziel, welches er angibt. Die Verbindung wird nach Abschluss der Nutzung auf Anforderung eines der Teilnehmer wieder ausgelöst. In ATM-Netzen bezeichnet man derartige Verbindungen als 'switched VCs (SVC)' und derartige Pfade als 'switched VPs (SVP)'. Die SC-Signali-sierung erfolgt hierbei z.B. mit Protokollelementen der eingangs erwähnten Serie Q.2761 bis Q.2764, "B-ISUP (Broadband ISDN User Part) Basic Call" bzw. der Empfehlung AF-PNNI-0055.000, "Private Network-Network Interface".

Switched Connections weisen folgende Charakteristika auf:
- Die SCs werden infolge von Steueranweisungen der Teilnehmer aufgebaut.
- Bei einem Ausfall der SC z.B. auf einem Teilstück ist die SC als ganzes zerstört und kann nicht mehr genutzt werden. Es erfolgt kein automatischer Wiederaufbau. Die Teilnehmer müssen den Ausfall der SC selbst erkennen und ggf. den Aufbau einer neuen SC anfordern.
- Während des Verbindungsaufbaus und für die Dauer der Verbindung besteht zwischen den Teilnehmern neben der SC auch noch eine (SC-) Signalisierungsverbindung, über die die Teilnehmer (oder parallel dazu die Netzbetreiber) untereinander Informationen austauschen können. Typische Informationen sind beispielsweise: Adresse des rufenden Teilnehmers (z.B. IP-Adresse oder Rufnummer), Adresse des gerufenen Teilnehmers, Gebühreninformationen.
- Es besteht keine feste Zuordnung zwischen Anfangs- und Endpunkt der Verbindung. Der eine SC anfordernde Teilnehmer kann den Endpunkt der SC durch Angabe der B-Rufnummer frei wählen.

In zeitgemäßen Netzen werden SCs und PCs infolge der unterschiedlichen Charakteristika unterschiedlich administriert.

PCs bestehen üblicherweise aus drei Segmenten: 1) dem Segment S1_{PC} zwischen dem A-Teilnehmer und seinem zugeordneten Übertragungsknoten Ü_{A}, 2) dem Segment S2_{PC} zwischen dem B-Teilnehmer und seinem zugeordneten Übertragungsknoten Ü_{B}, 3) dem Segment S3_{PC} zwischen den beiden Übertragungsknoten Ü_{A} und Ü_{B}. Die beiden ersten Segmente S1_{PC}, S2_{PC} werden üblicherweise dem sog. Zugangsnetz - auch 'Access Network' genannt - zugeordnet. Das dritte Segment S3_{PC} ist Teil des sog. Kernnetzes - auch 'Core Network' genannt. Dieses Teilstück wird im Bedarfsfall auch als Protected PC ausgeführt, z.B. bei einer PC zwischen zwei zentralen Großrechnern einer Bank.

SCs bestehen ebenfalls aus drei Segmenten: 1) dem Segment S1_{SC} zwischen dem A-Teilnehmer und seinem zugeordneten Vermittlungsknoten V_{A}, 2) dem Segment S2_{SC} zwischen dem B-Teilnehmer und seinem zugeordneten Vermittlungsknoten V_{B}, 3) dem Segment S3_{SC} zwischen den beiden Vermittlungsknoten V_{A} und V_{B}. Die beiden ersten Segmente S1_{SC}, S2_{SC} werden ebenfalls dem Access Network zugeordnet. Das dritte Segment S3_{SC} ist ebenfalls Teil Core Network. Im Unterschied zu den PCs wird jedoch das dritte Segment S3_{SC} in bestehenden Telephonnetzen nicht als geschützte Verbindung ausgeführt, da hierfür vorsorglich eine Vielzahl von Ersatzwegen bereitgehalten werden müsste, die alle die gleiche Bandbreite wie die Hauptwege ausweisen müssten und zudem leer und ungenutzt bereitstehen müssten. Eine derart resourcenintensive Protection wird lediglich für ausgewählte, einzelne PCs realisiert, ist aber als allgemeines Schutzkonzept für eine Vielzahl von SCs nicht geeignet. Deshalb wird das Segment S3_{SC} einer SC im Core Network grundsätzlich als ungeschützte SC realisiert.

Problematisch ist somit, dass die Vorteile der PCs - sichere Verfügbarkeit durch automatischen Wiederaufbau - und die Vorteile der SC - Signalisierung und gezielte Partnerauswahlnicht gleichzeitig genutzt werden können.

In BTD-CS-REROUTE-01.04, "Edge-based rerouting for point-to-point calls version 1.0 (baseline text document)", einem Arbeitspapier des ATM Forums, ist ein Verfahren zur Lösung dieses Problems vorgeschlagen, bei dem das Signalisierungsprotokoll AF-PNNI-0055.000, "Private Network-Network Interface", zur Steuerung der SCs erweitert wird. Durch Definition und Implementierung entsprechender Protokollinformationselemente und Prozeduren sollen einzelne SCs nach einem Ausfall abschnittsweise zwischen zwei Knoten im Netz wieder herstellbar sein. Die Ergänzung der standardisierten Signalisierungsprotokolle ist jedoch ein langwieriger Prozess, da die Ergänzungen erst in den entsprechenden Gremien entwickelt und verabschiedet werden müssen. Zudem ist bei Ausfall eines breitbandigen Pfades, in dem eine Vielzahl von SCs enthalten ist, für jeden betroffenen SC eine separate Wiederherstellung erforderlich, wodurch das Netz durch die Signalisierungsmeldungen stark belastet wird.

Eine Aufgabe der Erfindung liegt darin, ein gegenüber dem in der BTD-CS-REROUTE-01.04 vorgeschlagenen Verfahren verbessertes Konzept zur Wiederherstellung von unterbrochenen Switched Connections zu finden.

Die Aufgabe wird durch die Merkmale des Patentanspruchs 1 gelöst.

Demnach entfällt eine Ergänzung von standardisierten (SC-) Signalisierungsprotokollen um Parameter zum Aufbau eines geschützten Kanals, da in dem Kommunikationsnetz mit zumindest zwei Übermittlungsknoten und zumindest einer Netzsteuerung, wobei der erste Teilnehmer dem ersten Übermittlungsknoten und der zweite Teilnehmer dem zweiten Übermittlungsknoten zugeordnet ist, zwischen den beiden Übermittlungsknoten zumindest auf einer Teilstrecke zumindest ein geschützter Kanal von der Netzsteuerung und nicht von dem standardisierten (SC-) Signalisierungsprotokoll aufgebaut wird.

Bei entsprechender Ausgestaltung des geschützten Kanals, wird zudem der Signalisierungsaufwand zum Wiederaufbau von unterbrochenen Switched Connections, die in dem geschützten Kanal aufgebaut sind, signifikant gesenkt, da bei Unterbrechung der Switched Connections infolge einer Unterbrechung des geschützten Kanals nicht die unterbrochenen Switched Connections wiederhergestellt werden, sondern lediglich der geschützte Kanal wiedergestellt wird.

Neben diesen unmittelbar mit der Lösung der Aufgabe verbundenen Vorteilen weist die Erfindung weitere wesentliche Vorteile auf, von denen einige im folgenden aufgeführt seien:
- Die Erfindung ist herstellerunabhängig. Alle Knoten, die die standardisierten SCs und PCs beherrschen können das Verfahren herstellerübergreifend nutzen.
- Die Erfindung kann sofort eingeführt werden. Es bedarf keiner Ergänzung der Signalisierungsprotokolle, da es auf den bereits bestehenden, standardisierten Protokollelementen und Prozeduren beruht. Die Anwendung ist im Allgemeinen ohne Software-Upgrade in allen Übermittlungsknoten des Core Network möglich.
- Indem der geschützte Kanal auch nur auf einer Teilstrecke eingerichtet werden kann, kann der Einsatz von geschützten Kanälen sehr flexibel auf unterschiedliche Anforderungen anpasst werden, die sich in verschiedenen Abschnitten des Kommunikationsnetzes an die Sicherheit der Switched Connections ergeben. So könnte man beispielsweise in erdbebengefährdeten Gebieten (z.B. Westküste der USA) wesentlich mehr Switched Connections über geschützte Leitungen führen als in anderen Gebieten (z.B.Ostküste der USA).

Gemäß einer Ausgestaltung der Erfindung ist der geschützte Kanal als Pfad ausgebildet, in dem eine Mehrzahl von Switched Connections aufgebaut werden kann - Anspruch 2. Dies führt zu einer signifikanten Reduzierung des Signalisierungsaufwands im Unterbrechungsfall, da lediglich der unterbrochenen Pfad, aber nicht die darin enthaltenen Switched Connections wieder aufgebaut werden müssen.

In einer Variante der Erfindung wird der geschützte Kanal nach einer Unterbrechung erneut aufgebaut - Anspruch 3. Nach einer Ausgestaltung dieser Variante ist der geschützte Kanal als Soft Permanent Connection ausgebildet - Anspruch 4. Somit entfällt der vorsorgliche Einsatz von Ersatzwegen, da diese erst im Bedarfsfall aufgebaut werden. Dies hat den Vorteil, dass im Normalfall, d.h. ohne Verbindungsunterbrechung, keine Netzresourcen für etwaige Ersatzwege reserviert werden müssen.

Gemäß einer weiteren Ausgestaltung der Erfindung wird der geschützte Kanal mit Hilfe von Protokollelementen und Prozeduren aufgebaut, die entsprechend denen des Standards Q.2767.1 (05/98) und/oder denen des Standards AF-PNNI-0055.000 (03/96) ausgebildet sind - Anspruch 5. Diese Standards definieren bereits Informationselemente und Prozeduren, um Endpunkte zu adressieren, als auch um die noch bestehenden Teilverbindungen innerhalb des Knotens wiederzufinden. Eine Modifikation der Protokollelemente von bestehenden Standards entfällt.

Nach einer Weiterbildung der Erfindung ist vorgesehen, dass bei zumindest einem weiteren, parallel zu dem geschützten Kanal eingerichteten, ungeschützten Kanal zwischen den beiden Übermittlungsknoten die Switched Connection wahlweise entweder in dem geschützten oder in dem ungeschützten Kanal aufgebaut wird - Anspruch 6. Hierbei ist insbesondere vorgesehen, dass nach Maßgabe zumindest eines Auswahlkriteriums ausgewählt wird, in welchem der beiden Kanäle die Switched Connection aufgebaut wird - Anspruch 7. Somit kann vom Netzbetreiber eine gezielte Auswahl getroffen werden, welche Switched Connections über geschützte Kanäle geleitet werden sollen und welche über ungeschützte. Die Auswahlkriterien können dabei vielfältig sein, z.B. die A-Rufnummer, die B-Rufnummer, die Kategorie des anrufenden Teilnehmers (Prioritätsteilnehmer) und/oder der Ursprung der Verbindung.

Weitere vorteilhafte Ausgestaltungen der Erfindung ergeben sich aus den unter- oder nebengeordneten Ansprüchen.

Die Erfindung wird im folgenden anhand von Ausführungsbeispielen, die in einer Figur dargestellt sind, näher erläutert. Es zeigt hierbei:

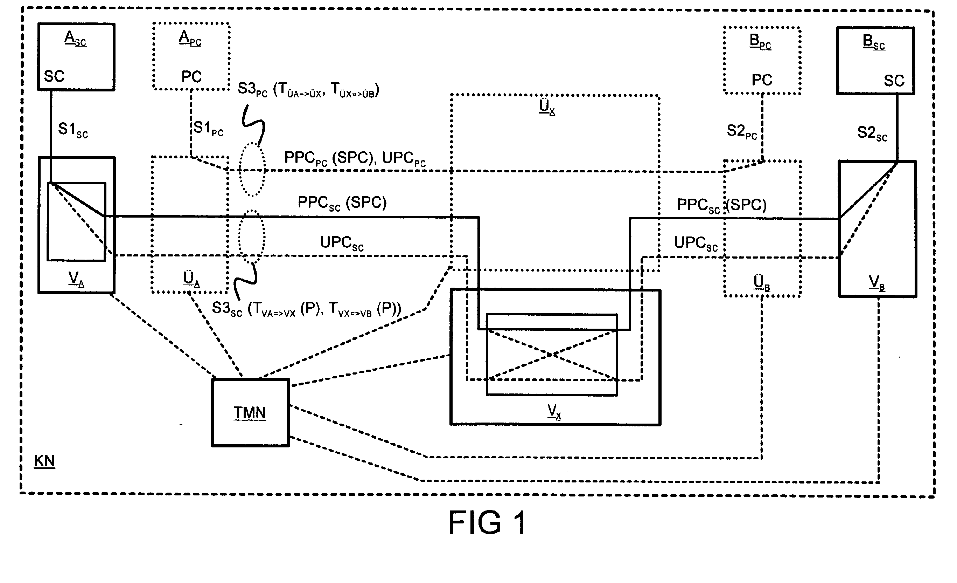

- Figur 1: einem Kommunikationsnetz einer Anordnung zur Durchführung des erfindungsgemäßen Verfahrens sowie einer erfindungsgemäßen Verwendung eines geschützten Kanals

In Figur 1 ist ein Kommunikationsnetz KN dargestellt. Das Kommunikationsnetz umfasst mehrere Übermittlungsknoten V_{A}, V_{B}, V_{X}, Ü_{A}, Ü_{B}, Ü_{X} wobei die Übermittlungsknoten Ü_{A}, Ü_{B}, Ü_{X} als Übertragungsknoten Ü ausgebildet sind. Dem Übermittlungsknoten V_{A} ist ein Teilnehmer A_{SC}, dem Übermittlungsknoten V_{B} ein Teilnehmer B_{SC}, dem Übertragungsknoten Ü_{A} ein Teilnehmer A_{PC} und dem Übertragungsknoten Ü_{B} ein Teilnehmer B_{PC} zugeordnet. Zwischen den Teilnehmern A_{SC}, B_{SC} ist eine Switched Connection SC und zwischen den Teilnehmern A_{PC}, B_{PC} eine Permanent Connection PC vorgesehen. Die Permanent Connection PC, die Übertragungsknoten Ü sowie die Teilnehmer A_{PC}, B_{PC} dienen lediglich zum besseren Verständnis des Zusammenspiels zwischen Switched Connections SC und Permanent Connections PC. Sie sind jedoch nicht erfindungswesentlich und deshalb gepunktet dargestellt.

Beide Connections SC, PC sind grob in drei logische Segmente unterteilt: 1) je einem Segment S1 zwischen dem jeweiligen Teilnehmer A und seinem jeweils zugeordneten Übermittlungsknoten V_{A} bzw. Ü_{A}, 2) je einem Segment S2 zwischen dem jeweiligen Teilnehmer B und seinem jeweils zugeordneten Übermittlungsknoten V_{B}, bzw. Ü_{B}, und 3) je einem Segment S3 zwischen den beiden Übermittlungsknoten V_{A} und V_{B} bzw. Ü_{A} und Ü_{B}.

Das dritte Segment S3 umfasst beispielsweise jeweils zwei Teilstrecken T, wobei die erste Teilstrecke T_{VA=>VX} bzw. T_{ÜA=>ÜX} zwischen den beiden Übermittlungsknoten V_{A} und V_{X} bzw. Ü_{A} und Ü_{X} und eine zweite Teilstrecke T_{VX=>VB} bzw. T_{ÜX=>ÜB} zwischen Übermittlungsknoten V_{X} und V_{B} bzw. Ü_{X} und Ü_{B} vorgesehen ist.

Die Teilstrecken T des dritten Segments S3_{PC} der Permanent Connection PC sind entweder als geschützter Kanal PPC_{PC} oder als ungeschützter Kanal UPC_{PC} ausgebildet, je nachdem, ob die Teilnehmer A_{PC}, B_{PC} eine geschützte oder eine ungeschützte Permanent Connection PC beantragt haben.

Zumindest eine der Teilstrecken T des dritten Segments S3_{SC} der Switched Connection SC ist erfindungsgemäß als geschützter Kanal PPC_{SC} ausgebildet, d.h. die Switched Connection SC wird auf dieser Teilstrecke T grundsätzlich in dem geschützten Kanal PPC_{SC} aufgebaut. Optional ist gemäß einer Ausgestaltung der Erfindung zudem ein weiterer, ungeschützter Kanal UPC_{SC} vorgesehen, der parallel zu dem geschützter Kanal PPC_{SC} verläuft. In diesem Fall kann die Switched Connection SC wahlweise anstatt in dem geschützten Kanal PPC_{SC} auch in dem ungeschützten Kanal UPC_{SC} aufgebaut werden. Diese Auswahl erfolgt bei einem dritten Segment S3_{SC}, das nur eine einzige Teilstrecke T umfasst, vorzugsweise in dem Übermittlungsknoten V_{A}. Sofern das dritte Segment S3_{SC} mehrere Teilstrecken T_{VA=>VX}, T_{VX=>VB} umfasst, erfolgt die Auswahl ggf. in mehr als einem Übermittlungsknoten V. Insbesondere kann ein Switched Connection SC, die auf der Teilstrecke T_{VA=>VX} in dem geschützen Kanal PPC_{SC} aufgebaut wurde, auf der Teilstrecke T_{VX=>VB} im ungeschützten Kanal UPC_{SC} aufgebaut werden und umgekehrt. Dieser Sachverhalt ist in dem Übermittlungsknoten V_{X} dargestellt.

Der geschützte Kanal PPC ist z.B. als Soft Permanent Connection SPC realisiert. Diese SPC wird bei einer Unterbrechung entsprechend der Recommendation der ITU-T Q.2767.1, "Soft PVC Capability" oder der Empfehlung des ATM-Forums AF-PNNI-0055.000, "Private Network-Network Interface" automatisch, d.h. ohne Eingriffe der Teilnehmer A, B oder des Netzmanagements TMN wieder aufgebaut.

Weiterhin ist allen Übermittlungsknoten V, Ü eine Netzsteuerung TMN zugeordnet. Von dieser werden üblicherweise mit Hilfe von Steueranweisungen Permanent Connections PC zwischen den Übermittlungsknoten V, U des Kommunikationsnetzes KN eingerichtet und ggf. - z.B. bei einer Unterbrechung -, je nach Art der Permanent Connection PC auch wiederaufgebaut.

Bei Ausführung der Erfindung wird zunächst zwischen den beiden Übermittlungsknoten V_{A}, V_{B}, V_{X} von der Netzsteuerung TMN zumindest ein geschützter Kanal PPC_{SC} aufgebaut. Anschließend wird die Switched Connected SC dynamisch unmittelbar vor Beginn ihrer Nutzung aufgebaut. Hierbei wird sie auf zumindest einer Teilstrecke T des Segments S3_{SC} in dem geschützten Kanal PPC_{SC} aufgebaut.

Im Fall einer Unterbrechung der Switched Connection SC infolge einer Unterbrechung des geschützten Kanals PPC_{SC} wird nun nicht die unterbrochene Switched Connection SC selbst wiederhergestellt, sondern der geschützte Kanal PPC_{SC}. Besonders schöne Vorteile sind hierbei mit einem geschützten Kanal PPC_{SC} verbunden, der als Pfad P ausgebildet ist, in dem eine Mehrzahl von Switched Connections SC aufgebaut werden kann. In diesem Fall wird der für den Wiederaufbau erforderlich Signalisierungsaufwand minimiert, da lediglich der unterbrochenen Pfad P, aber nicht die darin enthaltenen Switched Connections SC wieder aufgebaut werden müssen.

Wird der geschützte Kanal als Soft Permanent Connection SPC ausgeführt, entfällt eine Erweiterung bestehender Standards, sofern im Fall einer Unterbrechung der Wiederaufbau mit Hilfe von Protokollelementen und Prozeduren durchgeführt wird, die entsprechend denen des Standards Q.2767.1 und/oder denen des Standards AF-PNNI-0055.000 ausgebildet sind. Alternativ könnte der Wiederaufbau auch durch das Netzmanagement TMN gesteuert und durchgeführt werden.

Wird entsprechend einer Variante der Erfindung parallel zu dem geschützten Kanal PPC_{SC} zumindest ein weiterer, ungeschützter Kanal UPC_{SC} vorgesehen, so kann die Switched Connection SC wahlweise anstatt in dem geschützten Kanal PPC_{SC} auch in dem ungeschützten Kanal UPC_{SC} aufgebaut werden. Diese Auswahl erfolgt vorzugsweise nach Maßgabe eines Auswahlkriteriums, z.B. der Rufnummer des Teilnehmers A_{SC}, der Rufnummer des Teilnehmers B_{SC}, der Kategorie des anrufenden Teilnehmers - z.B. Teilnehmer A_{SC} - und/oder der Ursprung der Verbindung. Die Auswahl wird bei Aufbau der Verbindung durch den Teilnehmer A_{SC} vorzugsweise in dem Übermittlungsknoten V_{A} vorgenommen, da diesem der Teilnehmer A_{SC} zugeordnet ist.

Abschließend sei betont, dass die Beschreibung der für die Erfindung relevanten konkreten Komponenten des Kommunikationsnetzes KN grundsätzlich nicht einschränkend zu verstehen sind. Für einen einschlägigen Fachmann ist offensichtlich, dass die Komponenten - z.B. die geschützten Kanäle PPC - in beliebigen Ausgestaltungen und mit beliebigen Mitteln, d.h. auch mit vorab bereitgestellten Ersatzwegen, realisiert werden können.

## Patentansprüche

1. Verfahren zur Wiederherstellung einer unterbrochenen Switched Connection (SC) zwischen zumindest zwei Teilnehmern (A, B) im einem Kommunikationsnetz (KN) mit zumindest zwei Übermittlungsknoten (V_{A}, V_{B}) und zumindest einer Netzsteuerung (TMN), wobei der erste Teilnehmer (A) dem ersten Übermittlungsknoten (V_{A}) und der zweite Teilnehmer (B) dem zweiten Übermittlungsknoten (V_{B}) zugeordnet ist,
mit folgenden Schritten:
- zwischen den beiden Übermittlungsknoten (V_{A}, V_{B}) wird von der Netzsteuerung (TMN) zumindest auf einer Teilstrecke (T) zumindest ein geschützter Kanal (PPC_{SC}) aufgebaut,
- die Switched Connection (SC) wird zwischen den beiden Übermittlungsknoten (V_{A}, V_{B}) in dem geschützten Kanal (PPC_{SC}) aufgebaut, und
- bei Unterbrechung der Switched Connection (SC) infolge einer Unterbrechung des geschützten Kanal (PPC_{SC}) wird die unterbrochene Switched Connection (SC) dadurch wiederhergestellt, dass der geschützte Kanal (PPC_{SC}) wiedergestellt wird.

2. Verfahren nach Anspruch 1,
bei dem der geschützte Kanal (PPC_{SC}) als Pfad (P) ausgebildet ist, in dem eine Mehrzahl von Switched Connections (SC) aufgebaut werden kann.

3. Verfahren nach einem der Ansprüche 1 oder 2,
bei dem der geschützte Kanal (PPC_{SC}) nach einer Unterbrechung erneut aufgebaut wird.

4. Verfahren nach Anspruch 3,
bei dem der geschützte Kanal (PPC_{SC}) als Soft Permanent Connection (SPC) ausgebildet ist.

5. Verfahren nach einem der vorstehenden Ansprüche,
bei dem der geschützte Kanal (PPC_{SC}) mit Hilfe von Protokollelementen und Prozeduren aufgebaut wird, die entsprechend denen des Standards Q.2767.1 (05/98) und/oder denen des Standards AF-PNNI-0055.000 (03/96) ausgebildet sind.

6. Verfahren nach einem der vorstehenden Ansprüche,
bei dem bei zumindest einem weiteren, parallel zu dem geschützten Kanal (PPC_{SC}) eingerichteten, ungeschützten Kanal (UPC_{SC}), die Switched Connection (SC) wahlweise anstatt in dem geschützten Kanal (PPC_{SC}) auch in dem ungeschützten Kanal (UPC_{SC}) aufgebaut werden kann.

7. Verfahren nach Anspruch 6,
bei dem nach Maßgabe zumindest eines Auswahlkriteriums ausgewählt wird, in welchem der beiden Kanäle (PPC_{SC}, UPC_{SC}) die Switched Connection (SC) aufgebaut wird.

8. Verfahren nach Anspruch 7,
bei dem bei einer einzigen Teilstrecke (T) zwischen dem ersten Übermittlungsknoten (V_{A}) und dem zweiten Übermittlungsknoten (V_{B}) die Auswahl in dem ersten Übermittlungsknoten (V_{A}) erfolgt.

9. Verwendung eines geschützten Kanals (PPC_{SC}) in einem Kommunikationsnetz (KN), um die Durchführung eines Verfahrens nach einem der vorherstehenden Ansprüche zu ermöglichen.

10. Anordnung zur Durchführung eines Verfahrens nach einem der Ansprüche 1 bis 8.
